(19) Europäisches Patentamt
European Patent Office
Office européen des brevets

(11) EP 4 372 697 A1

(12) EUROPEAN PATENT APPLICATION

(43) Date of publication:
22.05.2024 Bulletin 2024/21

(21) Application number: 22306692.9

(22) Date of filing: 17.11.2022

(51) International Patent Classification (IPC):
G06V 10/44 (2022.01)          G06V 10/82 (2022.01)
G06V 40/16 (2022.01)

(52) Cooperative Patent Classification (CPC):
G06V 40/168; G06V 10/454; G06V 10/82

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• THALES DIS FRANCE SAS
92190 Meudon (FR)
• THALES
92400 Courbevoie (FR)
• INRIA - Institut National de Recherche en
Informatique et en Automatique
78150 Le Chesnay (FR)

(72) Inventors:
• ANGHELONE, David
92190 MEUDON (FR)
• LANNES, Sarah
92190 MEUDON (FR)
• DANTCHEVA, Antitza
06902 Sophia Antipolis Cedex (FR)

(74) Representative: Quintero Romero, Manuel
Thales Dis France SAS
Intellectual Property Department
6, rue de la Verrerie
92190 Meudon (FR)

(54) SYSTEM AND METHOD OF UNVEILING HIGH-RESOLUTION VISIBLE FACE IMAGES FROM LOW-RESOLUTION FACE IMAGES

(57) The present invention provides a method or system of unveiling high-resolution visible face images from any low-resolution thermal face images can include inputting any number of thermal face images as an input through a generative adversarial network to perform spectrum translation of the low-resolution thermal face images to a number of high-resolution visible face images, training the generative adversarial network with at least a reference high resolution image, adapting or training the generative adversarial network for one or more among L1 loss, perceptual loss, and identity loss, and generating a high-resolution visible face image from any low-resolution thermal face images provided as an input to the generative adversarial network. In some embodiments, the method further adapts the generative adversarial network by further adapting or training for one or more among attribute loss and local loss. In some embodiments, the method simultaneously adapts for one or more of L1 loss, perceptual loss, identity loss, attribute loss and local loss.

FIG. 1

EP 4 372 697 A1

**Description**

**TECHNICAL FIELD**

The present disclosure generally relates to generating high-resolution visible face images from low-resolution face images. More particularly, but not exclusively, the present disclosure relates to unveiling high-resolution visible face images from any low-resolution infrared face or thermal face images while preserving biometric identity.

**BACKGROUND OF THE INVENTION**

Thermal sensors play a crucial role in detecting and recognizing humans during surveillance operations, especially in the context of long-range distance acquisition or capture under adverse lighting conditions (low-light or night-time environments). However, infrared imaging and thermal imaging in particular does not provide a detailed rendering of faces, thus making it challenging when operating a biometric monitoring system. In particular, long distance acquisitions degrade facial verification performances as faces represent few pixels of the images with little biometrics information. Therefore, recovering accurate High-Resolution (HR) visible-spectrum face images from any Low spatial Resolution (LR) infrared spectrum face images is of particular pertinence in designing operational Cross-spectral Face Recognition (CFR) systems, where a visible face image is compared to a face image acquired beyond the visible. Such artificial process is referred to as Super Resolution (SR) or Hallucination, and can infer HR image from a single image or sequential LR images.

All existing solutions and related work noted by third parties disclosed further below only allow for super resolution from a fixed input resolution, making them completely impractical in real-life scenarios.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

**SUMMARY OF THE INVENTION**

The present invention provides a solution for the aforementioned problems by a method of unveiling high-resolution visible face images from any low-resolution infrared face images according to claim 1, a system for unveiling high-resolution visible face images from any low-resolution infrared face images according to claim 12, and a system for unveiling high-resolution visible face images from any low-resolution infrared face images according to claim 15. In dependent claims, preferred embodiments of the invention are defined.

In a first inventive aspect, the invention provides a method of unveiling high-resolution visible face images from any low-resolution infrared face images can include the steps of inputting any number of infrared face images as an input through a generative adversarial network to perform spectrum translation of the low-resolution infrared face images to a number of high-resolution visible face images, training the generative adversarial network with at least a reference high resolution image, adapting the generative adversarial network for one or more among L1 loss, perceptual loss, and identity loss, and generating a high-resolution visible face image from any low-resolution infrared face images provided as an input to the generative adversarial network. Note that infrared face images includes thermal face images.

Namely, infrared spectrum includes four spectral bands: "near infrared" (NIR), "short-wave infrared" (SWIR), "medium-wave infrared" (MWIR) and "long wave infrared" (LWIR). Both MWIR and LWIR are also known as "thermal".

Therefore, the method according to the invention can be used with any infrared input images.

In some embodiments, the method simultaneously performs the functions of super resolution and domain translation of the infrared face images while preserving biometric identity.

In some embodiments, the method learns an end-to-end mapping between the thermal or infrared spectrum and the visible spectrum trains of the adversarial network.

In some embodiments, the method uses an image encoder-decoder structure to generate the high-resolution visible face images.

In some embodiments, the method uses an image encoder-decoder structure based on a pyramidal architecture that relies on multi-scale analysis to generate the high-resolution visible face images.

In some embodiments, the method further adapts the generative adversarial network by further training the adversarial networking using one or more among attribute loss and local loss. In some embodiments, the method simultaneously adapts for one or more of L1 loss, perceptual loss, identity loss, attribute loss and local loss.

In some embodiments, the method performs the step of skip connection between encoded infrared face images and the decoded high-resolution visible face images.

In some embodiments, the method performs the step of squeeze and excitation between encoded infrared face images and the decoded high-resolution visible face images.

In some embodiments, the method performs the steps of skip connection and squeeze and excitation between encoded infrared face images and the decoded high-resolution visible face images to enable super resolution and domain translation of the infrared face images while preserving biometric identity for any resolution of infrared face images as inputs.

In some embodiments, the method unveils high-resolution visible face images from any low-resolution infrared face images while ensuring cross-spectral identity.

In a second inventive aspect, the invention provides a system for unveiling high-resolution visible face images from any low-resolution infrared face images includes one or more processors, and a memory coupled to the one or more processors (such as GPUs or CPUs), the memory containing computer instructions which when executed causes the one or more processors to perform certain steps or operations at an generative adversarial network. In some embodiments, the steps or operations can include inputting any number of infrared face images as an input through the generative adversarial network to perform spectrum translation of the low-resolution infrared face images to a number of high-resolution visible face images, training the adversarial network with at least a reference high resolution image, filtering the generative adversarial network for one or more among L1 loss, perceptual loss, and identity loss, and generating a high-resolution visible face image from any low-resolution infrared face images provided as an input to the generative adversarial network.

In some embodiments, the system simultaneously performs the functions of super resolution and domain translation of the infrared face images while preserving biometric identity.

In some embodiments, the system uses an image encoder-decoder structure to generate the high-resolution visible face images.

In some embodiments, the system uses an image encoder-decoder structure based on a pyramidal architecture that relies on multi-scale analysis to generate the high-resolution visible face images.

In some embodiments, the system further filters the generative adversarial network by further filtering for one or more among attribute loss and local loss. In some embodiments, the system simultaneously filters for one or more of L1 loss, perceptual loss, identity loss, attribute loss and local loss.

In some embodiments, the system performs the step of skip connection between encoded infrared face images and the decoded high-resolution visible face images.

In some embodiments, the system performs the step of squeeze and excitation between encoded infrared face images and the decoded high-resolution visible face images.

In a third inventive aspect, the invention provides a system for unveiling high-resolution visible face images from any low-resolution infrared face images can include one or more processors, and a memory coupled to the one or more processors, the memory containing computer instructions which when executed causes the one or more processors to perform certain steps or operations at generative adversarial network. In some embodiments, the operations or step can include inputting any number of infrared face images as an input through a generative adversarial network to simultaneously perform super resolution and spectrum translation of the low-resolution infrared face images to a number of high-resolution visible face images, training the adversarial network with at least a reference high resolution image, filtering the generative adversarial network for one or more among L1 loss, perceptual loss, and identity loss, and generating a high-resolution visible face image from any low-resolution infrared face images provided as an input to the generative adversarial network.

All the features described in this specification (including the claims, description and drawings) and/or all the steps of the described method can be combined in any combination, with the exception of combinations of such mutually exclusive features and/or steps.

## DESCRIPTION OF THE DRAWINGS

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:

FIG. 1 illustrates a system of Unveiling High-Resolution visible face images from any Low-Resolution thermal face or infrared face images in accordance with the embodiments;

FIG. 2 illustrates global and local discriminator losses that can be used in system of Unveiling High-Resolution visible face images from any Low-Resolution thermal face or infrared face images accordance with the embodiments;

FIG. 3 illustrates another system of Unveiling High-Resolution visible face images from any Low-Resolution thermal face or infrared face images during a training phase in accordance with the embodiments;

FIG. 4 illustrates a couple of charts comparing results from the current embodiments with results from another third party system and further demonstrates the ability to reconstruct the same identity with different resolutions as an input in accordance with the embodiments;

FIG. 5 illustrates a chart comparing results from the current embodiments with the results from an AxialGAN system in accordance with the embodiments; and

FIG. 6 illustrates a flow chart of a method of Unveiling High-Resolution visible face images from any Low-Resolution thermal face or infrared face images in accordance with the embodiments.

## DETAILED DESCRIPTION OF THE INVENTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

Motivated by the deficiencies noted above in the existing technology, the embodiments herein address the task of matching *any* low-resolution infrared face images against a gallery of high-resolution visible face images by designing a unique model handling dual computer vision task of *super resolution* and *domain translation*, streamlined to be more adaptive to ensure the faithful representation of cross-spectral identity.

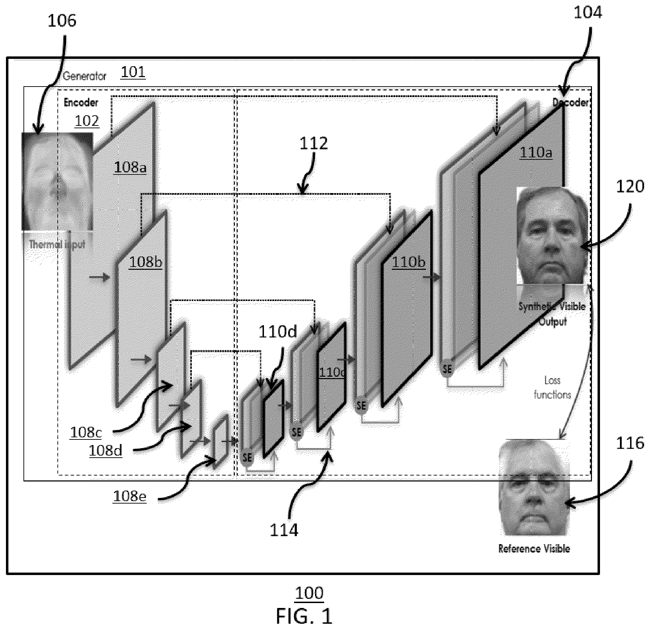

The disclosure herein also referred to as "ANYRES" enables simultaneously performing **face super resolution** and thermal-to-visible or infrared-to-visible **spectrum translation** while being robust to any low-resolution infrared inputs **while preserving the identity.** Benefits from the simultaneous process helps to avoid accumulating both errors and artifacts generation and to simultaneously bridge the modality gap and resolution gap. In particular with reference to the system and method 100 of FIG. 1, a blurry, infrared low-resolution face image 106 is transformed into sharp, realistic, high-resolution visible face image 120. The designed network brings the advantages to preserve consistent biometrics features across both low/high resolution space and infrared/visible spectrum, thus making it possible to compare the super resolved images against a gallery of visible images using any off-the-shelf face marking algorithms. Furthermore, the embodiments appear to be adaptive to real world scenarios as during operational applications humans are randomly distant from the camera and can there- fore depict multi-scale LR infrared face images (which depends upon the acquisition distance). Unlike known technology, where the resolution is fixed as input, ANYRES highlights its ability to operate at any input resolution ranging from low to high resolution. In FIG. 1, the encoded infrared input "images" range from higher resolution to lower resolution from 108a to 108e using the encoder 102 from the generative adversarial network 101. Generally, in some embodiments, 108a to 108e are encoded layers rather than images. Each of 108a-e is not one respective image anymore. 108a would be a set of maps (which are also known as images, but the preferred technical term is a "map" at this stage). For example, 108a can have 16 maps, 108b can have 32 maps, and so on. The increasing number of maps is not mandatory, but it is typically an ensemble. The decoded synthetic visible output "images" 110a-d (likewise, as noted with respect to 108a-e, will be sets of maps and not single images) ranging from higher resolution to lower resolution from 110a to 110d as shown using the decoder 104. In some embodiments as further detailed below, the system 100 performs the step of skip connection 112 between encoded infrared face images and the decoded high-resolution visible face images. In some embodiments, the system 100 will also perform the step of squeeze and excitation 114 between encoded infrared face images and the decoded high-resolution visible face images. In some embodiments, the system 100 will also use a reference visible image 116 to account for loss functions to facilitate the generation of the synthetic visible output 120 in the training phase.

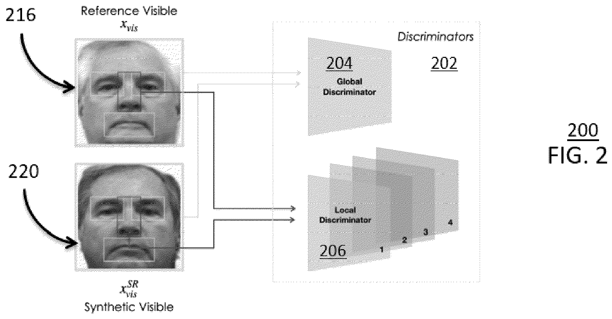

Referring to the system 200 of FIG. 2, discriminators 202 can be used including Global discriminator 204 and Local discriminators 206. While global discriminator 204 helps generate the right identity overall, the local discriminators 206, named L1,L2,L3 and L4 located on eyes, nose and mouth, respectively (of a Reference Visible image 216 and a synthetic visible image 220), are designed to focus on generated details of cross-spectral biometrics features and helps improve that identity by focusing on more biometric-relevant parts of the face. The photo-realistic images come from the L1 loss.

Some of the main contributions or novelties of ANYRES include a novel supervised learning framework for CFR that translates any LR infrared face image to HR visible face image. Thus, a system incorporating ANYRES can make possible the comparison of super resolved images against a gallery of visible images using any off-the-shelf face marking algorithms. ANYRES can accept any resolution, from low to high scale, thus making the model suitable for biometrics monitoring systems. ANYRES can also simultaneously perform super resolution and spectrum translation computer vision tasks, thus avoiding accumulated errors in-between steps. Custom loss functions have also been introduced in order to enhance both image quality as well as biometrics features preservation. Additionally, ANYRES can be adapted to any pair of spectra.

Related works

[AxialGAN] by Immidisetti, R., Hu, S., Patel, V. M. (2021, August) disclose "simultaneous face hallucination and translation for thermal to visible face verification using AxialGAN". In 2021 IEEE International Joint Conference on Biometrics (IJCB) (pp. 1-8). IEEE. AxialGAN aims to synthesize facial high-resolution visible images from low-resolution thermal counterparts. The proposed GAN framework designed an axial-attention layer, incorporated into both generator and discriminator networks, to model long-range dependencies to facilitate long-distance face matching. In another related work, MEI, Yiqun, GUO, Pengfei, et PATEL, Vishal M. disclose "Escaping Data Scarcity for High-Resolution Heterogeneous Face Hallucination". In: Proceedings of the I EEE/CVF Conference on Computer Vision and Pattern Recognition. 2022. p. 18676-18686. In yet another related work, MEI, Kangfu, MEI, Yiqun, et PATEL, Vishal M. disclose "Thermal to Visible Image Synthesis under Atmospheric Turbulence". arXiv preprint arXiv:2204.03057, 2022.

Proposed method

The proposed ANYRES method and system is a generative adversarial network (GAN) designed to address simultaneously dual computer vision tasks of *domain translation* and *super resolution* while preserving identity. In particular, ANYRES tackles the problem of matching any LR infrared face images or thermal face images against HR visible face images by (i) learning an end-to-end mapping between the thermal or infrared spectrum and the visible spectrum, and (ii) learning to handle any resolution input.

Problem Formulation

Lets consider the high-resolution space, with dimensionality $m \times n$, incorporating a visible domain $V$ with visible face images $x_{vis} \in R^{m \times n}$, and a thermal domain $T$ with thermal face images $x_{thm} \in R^{m \times n}$.
**Domain translation phase:** In the domain translation phase, image-to-image translation is performed by learning an end-to-end non-linear mapping, denoted $\Theta_{t \to v}$, between the thermal spectrum and the visible spectrum. This is formalized as follows:

$$\Theta_{t \to v} \quad : \quad \mathcal{T} \quad \to \quad \mathcal{V} \\ x_{thm} \quad \mapsto \quad x_{vis}^{synthetic}. \qquad (1)$$

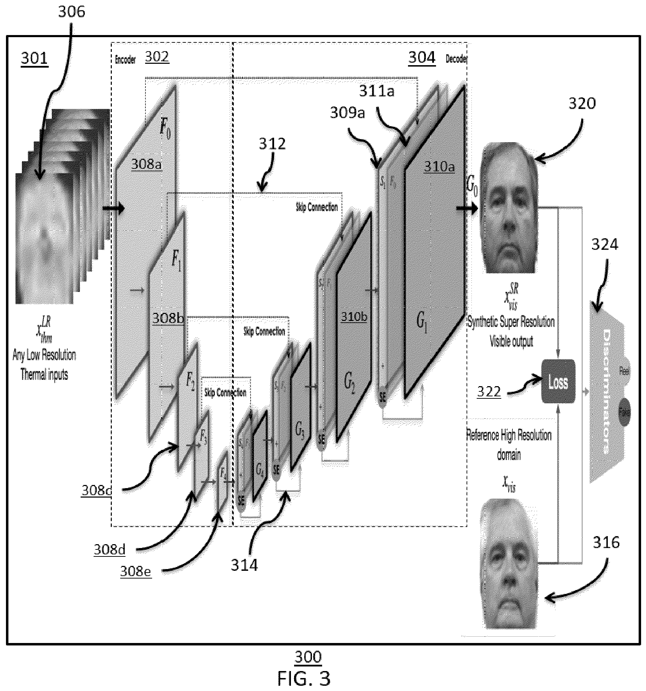

Consequently, $\Theta_{t \to v}$ is the function that synthesizes the corresponding thermal face images (see 306 in FIG. 3) into a realistic synthetic visible face images (320) $x_{vis}^{synthetic}$ in the high-resolution space.
**Super Resolution phase:** Given the embedding of Equation (1), the network 301 encapsulates as a simultaneous task, the super resolution scalability. Therefore, we aim to learn a conditional generation function where thermal low resolution facial image $x_{thm}^{LR} \in \mathbb{R}^{\frac{m}{r} \times \frac{n}{r}}$ is also enhanced to the high resolution scale, giving a synthetic visible image

$x_{vis}^{SR} \in \mathbb{R}^{m \times n}$ up-scaled by a $\times r > 0$ scale factor, via:

$$x_{vis}^{SR} = \Theta_{t \to v}(x_{thm}^{LR}). \qquad (2)$$

As elaborate above, thermal-to-visible face recognition based on GAN-synthesis, with the objective of being robust to any low resolution thermal inputs, aims to learn an unified function that, when applied to any low-resolution thermal image $x_{thm}^{LR}$, yields a higherresolution super resolved visible image $x_{vis}^{SR} \in \mathbb{R}^{m \times n}$ with rich semantic and identity information. In this context, the contribution of ANYRES is that it is learning simultaneously the global interaction between both domain translation and resolution scalability through the enrichment of Equation (1) by Equation (2). To be specific, for all scale factor $0 < r \leq m$, the method $\Theta t{\rightarrow}v$ is designed to learn neural networks by considering ($x_{thm}$, $x_{vis}$) -paired facial images and minimizing specific loss functions.

Baseline Model

To learn how to process any resolution as its input, without having to estimate such resolution, ANYRES as shown in the system 300 of FIG. 3 is based on a U-shape pyramidal architecture, thus relying naturally on a multi-scale analysis. The overall architecture is illustrated in FIG. 3. In one particular implementation, a U-Net architecture is used for its efficiency, where the generator 301 consists of an encoder-decoder structure (302/304) with skip connections 312 between domain specific encoder 302 and decoder 304. Considering the larger discrepancy between the images resulted from LR and HR spaces, the system 300 further uses *Squeeze-and-Excitation* (SE) blocks (314), which play the role of gate modulator after each skip connections process. With such strategy, channel-wise relationships brings flexible control and balances encoded features with decoded super resolved features.

Generator

**Cross-Resolution Interaction.** During training time, the network is fed simultaneously by batches of a wide range *r*-scale factor of low resolution thermal images 306. Note that, in the extreme case where only one low scale of resolution is considered, with fixed *r*, the model would be able to super resolve image from $\frac{m}{r} \times \frac{n}{r}$ to $m \times n$ scale of space (i.e., fixed low-resolution input unlike any low-resolution input). For better understanding, a model trained with one scale factor is called *mono-resolution*, whereas a model trained with several scale factor is called *multi-resolution.*

Encoder (302). The encoder 302 can extract multi-resolution features in parallel and fuse them repeatedly during the learning stage in order to generate high-quality SR-*representations (320)* with rich semantic/identity information.

Given a LR thermal input image (such as 306) $x_{thm}^{LR}$ we first use a layer $H_0$ to transform a LR input image space into a high-dimensional feature space:

$$F_0 = H_0\big(x_{thm}^{LR}\big). \qquad (3)$$

Here, Ho refers to a composite function of two successive Convolution-BatchNormalization-ReLU layers. Then, we apply a sequence of operations:

$$F_i = H_i\big(\mathrm{Pool}(F_{i-1})\big), \qquad (4)$$

where $F_i$ represents the intermediate encoded feature maps after the i-th operation, for all $i \in [1,K]$ with $K \in \mathbb{N}*$. Here, $H_i$ is the same composite function defined in Equation (3), and Pool denotes a max pooling operation where the most prominent features of the prior feature map are preserved. (See 308a through 308e)

**Decoder (304).** The decoder 304 aims at transforming a high-dimensional feature space into an output super resolved image 320 in the visible spectrum. Hence, the generative task towards the super resolved images is started from the deep level (U bottleneck),

$$G_K = H_K\big(SE(C(F_{K-1}, S_K(F_K)))\big). \qquad (5)$$

Then sequentially incremented, for all $i \in [1,K - 1]$, by

$$G_i = H_i(SE(C(F_{i-1}, S_i(G_{i+1})))), \qquad (6)$$

ended by the generation of the image $x_{vis}^{SR}$ (320) through Convolution-Tanh layers

$$G_0 = x_{vis}^{SR}. \qquad (7)$$

While S refers to upsampling operation of factor 2 followed by Convolution-BatchNormalization-ReLU layers, C concatenates all channels from the skip connection (312) $F_{i-1}$ (see 311a) with the up-sampled $S_i$ layers (see 309a). Finally, $G_i$ represents the decoded intermediate feature maps (see, for example, 310a) after the i-th operation preceded by Squeeze and Excitation SE (314).

Discriminators

In an adversarial learning, ANYRES is complemented by global and locally enhanced discriminators (see 204 and 206 in FIG. 2 or 324 in FIG. 3), named Dis$_{global}$ and Dis$_{local}$ respectively. The former helps the above generator to synthesize photo-realistic HR image in the visible spectrum, whereas the latter (in some embodiments) pays attention to every single facial fine detail and benefits from local inherent attention to capture faithful biometric features during the generation.

**Global Discriminator:** In some embodiments, a multi-scale discriminator is used which enables generation of realistic images with refined details. The global discriminator (such as 204 in FIG. 2) is responsible for performing a binary-classification by distinguishing a super resolved image $x_{vis}^{SR}$ (320) from real image $x_{vis}$. (316).

**Local Discriminator:** To synthesize biometric-realistic semantic content, the embodiments can focus on discriminative areas relevant for identity information, such as eyes, nose and mouth. Such regions of interests are represented by the same cropping area (shown in Fig. 2) between the images $x_{vis}$ and $x_{vis}^{SR}$ respectively titled $x_{vis-ROI,i}$ or $x_{vis-ROI,i}^{SR}$, with i E [0, 4]. Each independent discriminator pays attention to every single facial fine detail and benefits from local inherent attention to capture faithful biometric features during the generation.

Loss Functions

The adversarial learning process of ANYRES can be further augmented by an efficient combination of objective functions and pave the way to control the synthesis process at both pixels and features levels. On the one hand, the adversarial loss (322) including global and local is responsible to make generative sample realistic and not distinguishable from real images in the target domain. And on the other hand, the L1 loss drives the spectrum translation, while the perceptual loss, identity loss and attribute loss are used at high-level features to affect the perceptive rendering of the image, preserve the biometrics identity-specific features and enforce the consistent age-gender reconstruction, respectively. All loss functions combined together bring realism during spectral translation and avoid blurriness introduced by any low scale of resolution from thermal image inputs.

Adversarial loss Images generated during the translated phase through Equation (1) must be realistic. Therefore, the objective of the generator is to maximize the probability of the discriminators making incorrect decisions. The objective of the discriminators, on the other hand, is to maximize the probability of making a correct decision, i.e., to effectively distinguish between real and synthesized images. The global $\mathcal{L}_{GAN}^{Global}$ and local loss $\mathcal{L}_{GAN}^{Local}$ functions are part of the adversarial training and defined as follows:

$$\mathcal{L}_{GAN}^{Global} = \mathbb{E}_{x_{vis} \sim p_V} [\log(\mathbf{Dis}_{global}(x_{vis}))]$$
$$+ \mathbb{E}_{x_{vis}^{SR} \sim p_V} [\log(1 - \mathbf{Dis}_{global}(x_{vis}^{SR}))],$$

$$\mathcal{L}_{GAN}^{Local} = \sum_{i=0}^{4} \mathcal{L}_{GAN}^{Local,i},$$

where for all $i \in [0, 4]$, local discriminator $L_i$ gives the associated loss

$$\mathcal{L}_{GAN}^{Local,i} = \mathop{\mathbb{E}}_{x_{vis-ROI,i} \sim p_{\mathcal{V}}}[\log(L_i(x_{vis-ROI,i}))]$$
$$+ \mathop{\mathbb{E}}_{x_{vis-ROI,i}^{SR} \sim p_{\mathcal{V}}}[\log(1 - L_i(x_{vis-ROI,i}^{SR}))],$$

then, the adversarial loss is denoted as follows.

$$\mathcal{L}_{GAN} = \mathcal{L}_{GAN}^{Global} + \mathcal{L}_{GAN}^{Local}. \qquad (8)$$

**Conditional loss:** Imposing a condition on the spectral distribution is essential for generating images within the target spectrum. The conditional loss; or known as L1 loss, is defined as follows:

$$\mathcal{L}_{cond} = \mathop{\mathbb{E}}_{x_{vis};x_{vis}^{SR} \sim p_{\mathcal{V}}} \left\| x_{vis}^{SR} - x_{vis} \right\|_1. \qquad (9)$$

**Perceptual loss:** The perceptual loss $L_P$ affects the perceptive rendering of the image by measuring the high-level semantic difference between synthesized and target face images. It reduces artefacts and enables the reproduction of realistic details. $L_P$ is defined as follows:

$$\mathcal{L}_P = \mathop{\mathbb{E}}_{x_{vis};x_{vis}^{SR} \sim p_{\mathcal{V}}} \left\| \phi_P(x_{vis}^{SR}) - \phi_P(x_{vis}) \right\|_1, \qquad (10)$$

where, $\phi$P represents features extracted by VGG-19, pre-trained on ImageNet.

**Identity Loss:** The identity loss $\mathcal{L}_I$ preserves the identity of the facial input and relies on a pre-trained ArcFace recognition network to extract facial features embedding. Then, cosine similarity measure provides the identity loss function:

$$\mathcal{L}_I = \mathop{\mathbb{E}}_{x_{vis};x_{vis}^{SR} \sim p_{\mathcal{V}}} \left[ 1- < \phi_I(x_{vis}), \phi_I(x_{vis}^{SR}) > \right], \qquad (11)$$

**Attribute** Loss: The attribute loss $\mathcal{L}_A$ prevents attribute shift during spectrum translation. In particular, age and gender information are subtly not available on thermal images. While age brings apparent information, gender relies on identity. Therefore, apparent age loss $\mathcal{L}_A^{Age}$ and gender loss $\mathcal{L}_A^{Gender}$ are defined as follows:

$$\mathcal{L}_A^{Age} = \mathop{\mathbb{E}}_{x_{vis};x_{vis}^{SR} \sim p_{\mathcal{V}}} \left\| \phi_{Age}(x_{vis}^{SR}) - \phi_{Age}(x_{vis}) \right\|_1, \quad (12)$$

$$\mathcal{L}_A^{Gender} = \mathop{\mathbb{E}}_{x_{vis};x_{vis}^{SR} \sim p_{\mathcal{V}}} \left\| \phi_{Gender}(x_{vis}^{SR}) - \phi_{Gender}(x_{vis}) \right\|_1,$$
$$(13)$$

where $\phi_{Age}$ and $\phi_{Gender}$ are pre-trained models based on DeepFace facial attribute framework analysis. Then, the attribute loss is denoted as:

$$\mathcal{L}_A = \mathcal{L}_A^{Age} + \mathcal{L}_A^{Gender} \qquad (14)$$

Finally, the overall loss function for the proposed ANYRES embodiments herein can be the combination or any combination of the aforementioned loss functions.

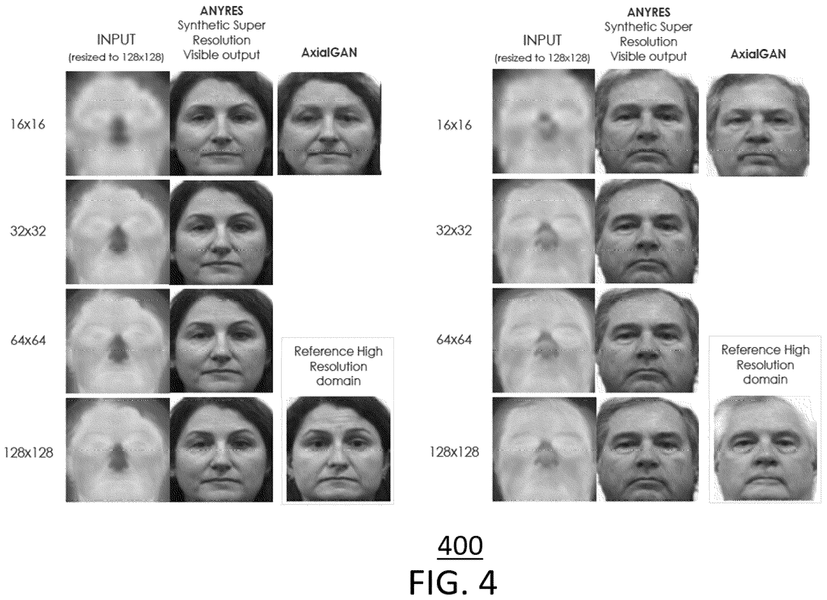

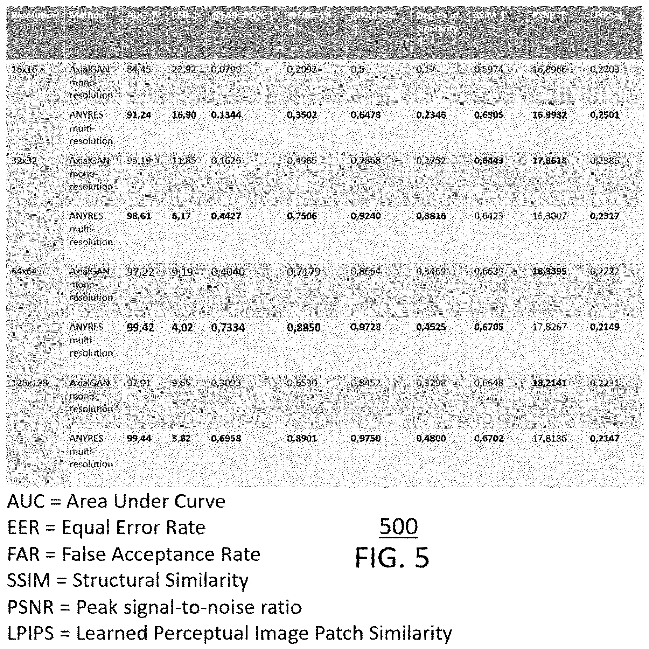

Referring to the chart 400 of FIG. 4, a comparison can be visually made between the ANYRES synthetic Super Resolution visible output resulting from various low resolution thermal input images and the AxialGan output for both female and male genders. The chart 500 of FIG. 5 further compares specific parameters (such as Area Under Curve (AUC), Equal Error Rate (EER), False Acceptance Rate (FAR), Structural Similarity (SSIM), peak signal-to-noise ratio (PSNR), and Learned Perceptual Image Patch Similarity (LPIPS)) between the ANYRES any resolution images and the AxialGan fixed mono resolution images.

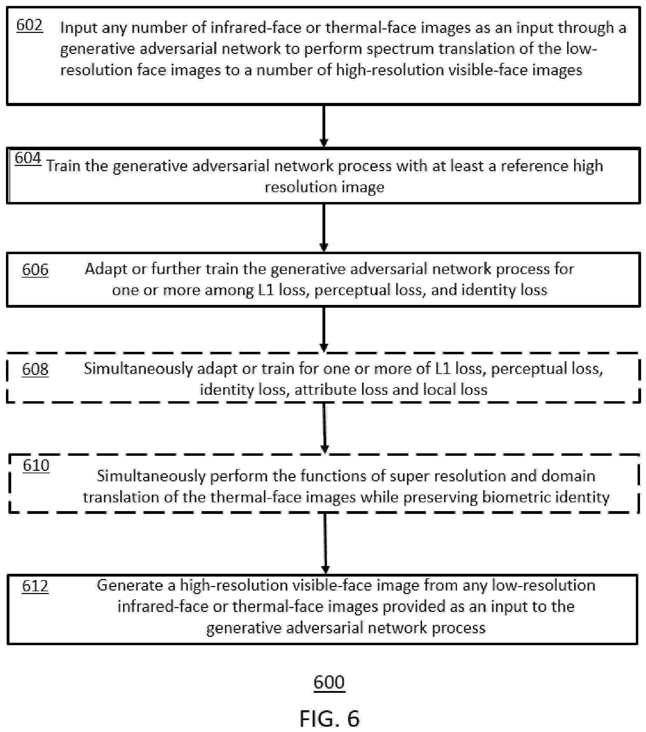

In some embodiments with reference to a method 600 of FIG. 6 of unveiling high-resolution visible face images from any low-resolution infrared face or thermal face images can include the steps of inputting at 602 any number of infrared face or thermal face images as an input through a generative adversarial network to perform spectrum translation of the low-resolution infrared face or thermal face images to a number of high-resolution visible face images, training at 604 the generative adversarial network with at least a reference high resolution image, adapting at 606 the generative adversarial network for one or more among L1 loss, perceptual loss, and identity loss, and generating at 612 a high-resolution visible face image from any low-resolution infrared face or thermal face images provided as an input to the generative adversarial network. In some embodiments, the method further filters the generative adversarial network by further filtering for one or more among attribute loss and local loss. In some embodiments, the method at step 608 simultaneously filters for one or more of L1 loss, perceptual loss, identity loss, attribute loss and local loss.

In some embodiments, the method at step 610 simultaneously performs the functions of super resolution and domain translation of the infrared face or thermal face images while preserving biometric identity. In some embodiments, the method learns an end-to-end mapping between the thermal spectrum and the visible spectrum trains of the adversarial network. In some embodiments, the method uses an image encoder-decoder structure to generate the high-resolution visible face images. In some embodiments, the method uses an image encoder-decoder structure based on a pyramidal architecture that relies on multi-scale analysis to generate the high-resolution visible face images.

In some embodiments, the method performs the step of skip connection between encoded infrared face or thermal face images and the decoded high-resolution visible face images and/or performs the step of squeeze and excitation between encoded infrared face or thermal face images and the decoded high-resolution visible face images.

In some embodiments, the method performs the steps of skip connection and squeeze and excitation between encoded infrared face or thermal face images and the decoded high-resolution visible face images to enable super resolution and domain translation of the infrared face or thermal face images while preserving biometric identity for any resolution of infrared face or thermal face images as inputs. In some embodiments, the method unveils high-resolution visible face images from any low-resolution infrared face or thermal face images while ensuring cross-spectral identity.

In summary, ANYRES is an innovative deep learning model designed to address simultaneously dual computer vision tasks of super resolution and domain translation while preserving identity. In particular, ANYRES tackles the problem of matching any LR infrared face or thermal face images against HR visible face images by (i) learning an end-to-end mapping between the infrared or thermal spectrum and the visible spectrum and (ii) learning to handle any resolution input.

(i) With respect to learning a mapping, ANYRES is based on a Generative Adversarial Network (GAN), which aims to perform spectrum translation, from the infrared or thermal domain to visible domain. The proposed architecture can use an image encoder/decoder structure. The decoding structure performing the generative task can be controlled through a combination of losses specifically designed to recreate realistic images (L1 loss), insuring they represent faces (perceptual loss) and more so are preserving the identity of the input face (identity loss). This process can be augmented by auxiliary tasks to better ensure the fidelity of the reconstruction, and these tasks include but are not limited to gender and age classification.

This process can be improved upon by using local discriminative losses on areas like the eyes, the nose and the mouth.

(ii) In order to learn to process any resolution as its input, without having to estimate the resolution, ANYRES can be based on a pyramidal architecture so that it is relying naturally on a multi-scale analysis. In one implementation, a U-net architecture is chosen for its efficiency, but other pyramidal architectures could be introduced. ANYRES can then be trained on batches of images of different resolutions. The skip connections (see 112 in FIG. 1 or 312 in FIG. 3) in the U-net architecture allows users to train the system to weigh the influence of different scales, thus making it possible to handle different resolutions with the same system.

Again, ANYRES proposes a novel supervised learning framework for CFR that translates any LR infrared face or thermal face image to HR visible face image. Thus, the system and method proposed makes it possible to compare the super resolved images against a gallery of visible image using any off-the-shelf face marking algorithms. ANYRES accepts any resolution, from low to high scale, thus making the model suitable for biometrics monitoring systems. ANYRES performs simultaneously super resolution and spectrum translation computer vision tasks, thus avoiding accumulated errors in-between steps. Custom loss functions have been introduced in order to enhance both image quality as well as biometrics features preservation.

In the absence of any specific clarification related to its express use in a particular context, where the terms " substantial " or " about " or "usually" in any grammatical form are used as modifiers in the present disclosure and any appended claims ( e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, (e.g., "including, but not limited to" ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

**Claims**

1. A method of unveiling high-resolution visible face images from any low-resolution infrared face images, comprising the steps of:

inputting any number of infrared face images as an input through a generative adversarial network to perform spectrum translation of the low-resolution infrared face images to a number of high-resolution visible face images;
training the generative adversarial network with at least a reference high resolution image;
adapting the generative adversarial network for one or more among L1 loss, perceptual loss, and identity loss; and
generating a high-resolution visible face image from any low-resolution infrared face images provided as an input to the generative adversarial network.

2. The method according to claim 1, wherein the method simultaneously performs the functions of super resolution and domain translation of the infrared face images while preserving biometric identity.

3. The method according to any of claims 1 or 2, wherein learning an end-to-end mapping between the infrared spectrum and the visible spectrum trains of the adversarial network.

4. The method according to any of claims 1 to 3, wherein method uses an image encoder-decoder structure to generate the high-resolution visible face images.

5. The method according to claim 4, wherein method uses an image encoder-decoder structure based on a pyramidal architecture that relies on multi-scale analysis to generate the high-resolution visible face images.

6. The method according to any of claims 1 to 5, wherein the method further adapts the generative adversarial network by further training for one or more among attribute loss and local loss.

7. The method according to claim 6, wherein the method simultaneously trains for one or more of L1 loss, perceptual loss, identity loss, attribute loss and local loss.

8. The method according to any of claims 1 to 7, wherein the method performs the step of skip connection between encoded infrared face images and the decoded high-resolution visible face images.

9. The method according to any of claims 1 to 8, wherein the method performs the step of squeeze and excitation between encoded infrared face images and the decoded high-resolution visible face images.

10. The method according to any of claims 1 to 9, wherein the method performs the steps of skip connection and squeeze and excitation between encoded infrared face images and the decoded high-resolution visible face images to enable super resolution and domain translation of the infrared face images while preserving biometric identity for any resolution of infrared face images as inputs.

11. The method according to any of claims 1 to 10, wherein the method unveils high-resolution visible face images from any low-resolution infrared face images while ensuring cross-spectral identity.

12. A system for unveiling high-resolution visible face images from any low-resolution infrared face images, comprising:

one or more processors;
a memory coupled to the one or more processors, the memory containing computer instructions which when executed causes the one or more processors to perform the steps at an generative adversarial network of:

inputting any number of infrared face images as an input through the generative adversarial network to perform spectrum translation of the low-resolution infrared face images to a number of high-resolution visible face images during a training phase;
training the adversarial network with at least a reference high resolution image;
adapting the generative adversarial network for one or more among L1 loss, perceptual loss, and identity loss; and
generating a high-resolution visible face image from any low-resolution infrared face images provided as an input to the generative adversarial network.

13. The system according to claim 12, wherein the system simultaneously performs the functions of super resolution and domain translation of the infrared face images while preserving biometric identity.

14. The system according to any of claims 12 or 13, wherein system uses an image encoder-decoder structure to generate the high-resolution visible face images, wherein the system preferably uses an image encoder-decoder structure based on a pyramidal architecture that relies on multi-scale analysis to generate the high-resolution visible face images.

**15.** A system for unveiling high-resolution visible face images from any low-resolution infrared face or thermal face images, comprising:

one or more processors;
a memory coupled to the one or more processors, the memory containing computer instructions which when executed causes the one or more processors to perform the steps at generative adversarial network of:

inputting any number of infrared face or thermal face images as an input through a generative adversarial network to simultaneously perform super resolution and spectrum translation of the low-resolution infrared face or thermal face images to a number of high-resolution visible face images;
training the adversarial network with at least a reference high resolution image;
filtering the generative adversarial network for one or more among L1 loss, perceptual loss, and identity loss; and
generating a high-resolution visible face image from any low-resolution infrared face or thermal face images provided as an input to the generative adversarial network.

100
FIG. 1

216 Reference Visible $x_{vis}$

220

$x_{vis}^{SR}$
Synthetic Visible

Discriminators

204 Global Discriminator 202

Local Discriminator 206 1 2 3 4

200
FIG. 2

FIG. 3

400

FIG. 4

| Resolution | Method | AUC ↑ | EER ↓ | @FAR=0,1% ↑ | @FAR=1% ↑ | @FAR=5% ↑ | Degree of Similarity ↑ | SSIM ↑ | PSNR ↑ | LPIPS ↓ |
|---|---|---|---|---|---|---|---|---|---|---|
| 16x16 | AxialGAN mono-resolution | 84,45 | 22,92 | 0,0790 | 0,2092 | 0,5 | 0,17 | 0,5974 | 16,8966 | 0,2703 |
| | ANYRES multi-resolution | **91,24** | **16,90** | **0,1344** | **0,3502** | **0,6478** | **0,2346** | **0,6305** | **16,9932** | **0,2501** |
| 32x32 | AxialGAN mono-resolution | 95,19 | 11,85 | 0,1626 | 0,4965 | 0,7868 | 0,2752 | **0,6443** | **17,8618** | 0,2386 |
| | ANYRES multi-resolution | **98,61** | **6,17** | **0,4427** | **0,7506** | **0,9240** | **0,3816** | 0,6423 | 16,3007 | **0,2317** |
| 64x64 | AxialGAN mono-resolution | 97,22 | 9,19 | 0,4040 | 0,7179 | 0,8664 | 0,3469 | 0,6639 | **18,3395** | 0,2222 |
| | ANYRES multi-resolution | **99,42** | **4,02** | **0,7334** | **0,8850** | **0,9728** | **0,4525** | **0,6705** | 17,8267 | **0,2149** |
| 128x128 | AxialGAN mono-resolution | 97,91 | 9,65 | 0,3093 | 0,6530 | 0,8452 | 0,3298 | 0,6648 | **18,2141** | 0,2231 |
| | ANYRES multi-resolution | **99,44** | **3,82** | **0,6958** | **0,8901** | **0,9750** | **0,4800** | **0,6702** | 17,8186 | **0,2147** |

AUC = Area Under Curve
EER = Equal Error Rate
FAR = False Acceptance Rate
SSIM = Structural Similarity
PSNR = Peak signal-to-noise ratio
LPIPS = Learned Perceptual Image Patch Similarity

500

FIG. 5

602 Input any number of infrared-face or thermal-face images as an input through a generative adversarial network to perform spectrum translation of the low-resolution face images to a number of high-resolution visible-face images

604 Train the generative adversarial network process with at least a reference high resolution image

606 Adapt or further train the generative adversarial network process for one or more among L1 loss, perceptual loss, and identity loss

608 Simultaneously adapt or train for one or more of L1 loss, perceptual loss, identity loss, attribute loss and local loss

610 Simultaneously perform the functions of super resolution and domain translation of the thermal-face images while preserving biometric identity

612 Generate a high-resolution visible-face image from any low-resolution infrared-face or thermal-face images provided as an input to the generative adversarial network process

600

FIG. 6

Europäisches
Patentamt
European
Patent Office
Office européen
des brevets

**EUROPEAN SEARCH REPORT**

Application Number

EP 22 30 6692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAKHIL IMMIDISETTI ET AL: "Simultaneous Face Hallucination and Translation for Thermal to Visible Face Verification using Axial-GAN", ARXIV.ORG, CORNELL UNIVERSITY LIBRARY, 201 OLIN LIBRARY CORNELL UNIVERSITY ITHACA, NY 14853, 7 August 2021 (2021-08-07), XP091024788, DOI: 10.1109/IJCB52358.2021.9484353 | 1-7, 11-15 | INV. G06V10/44 G06V10/82 G06V40/16 |
| Y | * abstract * * figure 3 * * page 3, the left-handed column, the last paragraph, "3.2. Generator" * * page 3, the right-hand column, the last paragraph, "3.4. Objective function" * ----- | 8-10 | |
| Y | CHEN CUNJIAN ET AL: "Attention-Guided Generative Adversarial Network for Explainable Thermal to Visible Face Recognition", 2022 IEEE INTERNATIONAL JOINT CONFERENCE ON BIOMETRICS (IJCB), IEEE, 10 October 2022 (2022-10-10), pages 1-8, XP034274806, DOI: 10.1109/IJCB54206.2022.10008000 [retrieved on 2023-01-17] * abstract * * paragraph "3.1.1 Generator" starting on page 2, the right-hand column * ----- -/-- | 8-10 | TECHNICAL FIELDS SEARCHED (IPC) G06V |

The present search report has been drawn up for all claims

| Place of search | Date of completion of the search | Examiner |
|---|---|---|
| The Hague | 21 April 2023 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

Application Number

EP 22 30 6692

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVID ANGHELONE ET AL: "Beyond the Visible: A Survey on Cross-spectral Face Recognition", ARXIV.ORG, CORNELL UNIVERSITY LIBRARY, 201 OLIN LIBRARY CORNELL UNIVERSITY ITHACA, NY 14853, 6 May 2022 (2022-05-06), XP091216887, * abstract * * section "5.2.3 Loss Functions for cross-spectral face recognition"; page 6, right-hand column; figure 10 * * starting "Hallucination"; page 8, right-hand column, paragraph 3 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 21 April 2023 | Natanni, Francesco |

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IMMIDISETTI, R. ; HU, S. ; PATEL, V. M.** simultaneous face hallucination and translation for thermal to visible face verification using AxialGAN. *2021 IEEE International Joint Conference on Biometrics (IJCB),* August 2021, 1-8

- **MEI, YIQUN ; GUO, PENGFEI ; PATEL, VISHAL M.** Escaping Data Scarcity for High-Resolution Heterogeneous Face Hallucination. *Proceedings of the IEEE/CVF Conference on Computer Vision and Pattern Recognition,* 2022, 18676-18686
- **MEI, KANGFU ; MEI, YIQUN ; PATEL, VISHAL M.** Thermal to Visible Image Synthesis under Atmospheric Turbulence. *arXiv:2204.03057,* 2022